# EUROPEAN PATENT APPLICATION

(11) **EP 4 751 695 A1**
(43) Date of publication of application: **03.06.2026**
(21) Application number: 24922665.5
(22) Date of filing: 02.09.2024
(51) Int. Cl.: A61G 10/02, F16J 15/02

(54) **SEALING GASKET AND HYPERBARIC OXYGEN CHAMBER INCLUDING SAME**

(71) Applicant: Ibex Medical Systems Co., Ltd., Wonju-si, Gangwon-do 26348 (KR)
(72) Inventor: The designation of the inventor has not yet been filed
(74) Representative: Manitz Finsterwald Patent- und Rechtsanwaltspartnerschaft mbB
(86) International application number: PCT/KR2024/013190
(87) International publication number: WO 2026/049102

(57) **Abstract**

The present disclosure relates to a hyperbaric oxygen chamber including a sealing gasket configured to surround a first flange and partially surround a peripheral surface of an opening in order to seal a gap between a chamber equipped with the first flange protruding inwards from the peripheral surface of the opening and a door that opens inwards toward the chamber. According to the present disclosure, the gasket is configured to surround the flange protruding from the opening of the chamber, thereby enabling the chamber to be sealed more effectively. Also, the wing of the gasket remains in close contact with an inner circumferential surface of the door, thereby enabling the gasket to maintain airtightness without being separated even when the pressure inside the chamber increases.

## Description

### TECHNICAL FIELD

The present disclosure relates to a hyperbaric oxygen chamber including a sealing gasket. More specifically, it relates to a hyperbaric oxygen chamber in which airtightness is maintained by a sealing gasket having a wing.

### BACKGROUND

The hyperbaric oxygen chamber is a major device used for hyperbaric oxygen therapy, and is configured to supply high-purity oxygen under pressure levels higher than those of the normal breathing environment.

Such a hyperbaric oxygen chamber is equipped with an entrance to accommodate a patient, but there is a problem of oxygen leakage through the entrance during hyperbaric oxygen therapy. Since the leakage of high-pressure oxygen may pose a risk of fire or explosion, it is important to suppress such leakage and maintain airtightness in the chamber.

Although various examples of hyperbaric oxygen chambers using different types of opening and closing mechanisms have been proposed to solve this problem, they have limitations in suppressing oxygen leakage through gaps between the components of the opening and closing mechanisms.

To solve this problem and more effectively maintain the airtightness in the chamber, the present disclosure provides a hyperbaric oxygen chamber including a sealing gasket.

### DISCLOSURE OF THE INVENTION

### PROBLEMS TO BE SOLVED BY THE INVENTION

The present disclosure is conceived to provide a hyperbaric oxygen chamber including a sealing gasket in which airtightness is maintained.

Also, the present disclosure is conceived to provide a hyperbaric oxygen chamber including a sealing gasket with a wing that maintains continuous contact with a door and thus having improved sealing performance.

### MEANS FOR SOLVING THE PROBLEMS

To solve the above-described problem, the present disclosure provides a hyperbaric oxygen chamber including a sealing gasket configured to surround a first flange and partially surround a peripheral surface of an opening in order to seal a gap between a chamber equipped with the first flange protruding inwards from the peripheral surface of the opening and a door that opens inwards toward the chamber.

The present disclosure also provides a hyperbaric oxygen chamber including a sealing gasket. The hyperbaric oxygen chamber further includes a first wing formed on a first sealing surface in contact with an outer circumferential surface of a door of a gasket to extend along the outer circumferential surface of the door, and when an air pressure inside the chamber increases, the chamber is sealed as the first wing is brought into contact with the door by air between the chamber and the door.

### EFFECTS OF THE INVENTION

According to the present disclosure, the gasket is configured to surround the flange protruding from the opening of the chamber, thereby enabling the chamber to be sealed more effectively.

According to the present disclosure, the wing of the gasket remains in close contact with an inner circumferential surface of the door, thereby enabling the gasket to maintain airtightness without being separated even when the pressure inside the chamber increases.

### BRIEF DESCRIPTION OF THE DRAWINGS

**FIG. 1** is a perspective sectional view of a chamber equipped with a gasket according to an embodiment of the present disclosure.
**FIG. 2** is an enlarged cross-sectional view showing the gasket coupled to the chamber according to a first embodiment of the present disclosure.
**FIG. 3** is an enlarged cross-sectional view showing a detailed configuration of the gasket according to the first embodiment of the present disclosure.
**FIG. 4** is an enlarged cross-sectional view showing the gasket coupled to the chamber according to a second embodiment of the present disclosure.
**FIG. 5** is an enlarged cross-sectional view showing a detailed configuration of the gasket according to the second embodiment of the present disclosure.
**FIG. 6** is an enlarged cross-sectional view illustrating the principle by which a first wing of the gasket is brought into close contact with a door according to the second embodiment of the present disclosure.

### MODE FOR CARRYING OUT THE INVENTION

Objects and effects of the present disclosure may become more apparent from the following description and the objects and effects of the present disclosure are not limited only by the following description.

Further, in the following description of the present disclosure, a detailed explanation of known related technologies may be omitted to avoid unnecessarily obscuring the subject matter of the present disclosure.

Hereinafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts throughout the whole document.

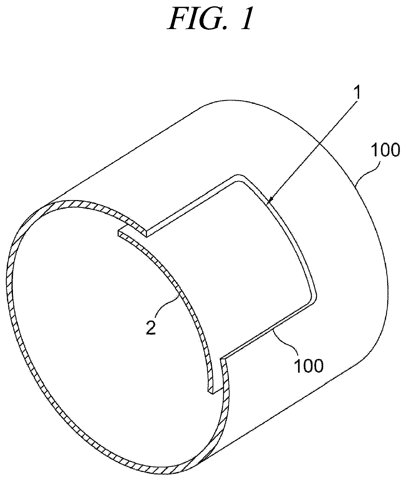

**FIG. 1** is a perspective sectional view of a chamber 100 equipped with a gasket 200 according to an embodiment of the present disclosure. Referring to **FIG. 1****,** the present disclosure relates to a hyperbaric oxygen chamber 100 including a gasket 200 configured to seal a gap between the chamber 100, which is equipped with a first flange 110 protruding inwards from a peripheral surface of an opening 1, and a door 2 that opens inwards toward the chamber 100.

To maintain airtightness in the hyperbaric oxygen chamber 100, the gasket 200 is preferably configured to surround the first flange 110 and partially cover the peripheral surface of the opening 1. In this case, the gasket 200 may be implemented in the form of a first embodiment or a second embodiment, depending on the shape of the flange.

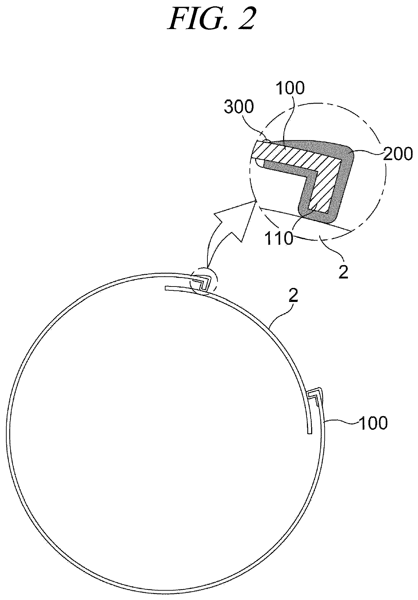

Hereinafter, embodiments of the gasket 200 according to the shape of the flange will be described in detail with reference to **FIG. 2** to **FIG. 4****.**

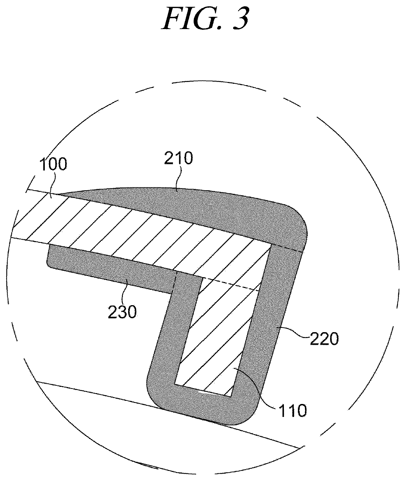

**FIG. 2** is an enlarged cross-sectional view showing the gasket 200 coupled to the chamber 100 according to a first embodiment of the present disclosure, and **FIG. 3** is an enlarged cross-sectional view showing a detailed configuration of the gasket 200 according to the first embodiment of the present disclosure.

The gasket 200 according to the first embodiment may have the shape shown in **FIG. 2** when only the first flange 110 is provided on the peripheral surface of the opening 1. More specifically, the gasket 200 according to the first embodiment may have an "L"-shaped cross sectional space therein and surround the first flange 110 and a part of the opening 1.

Specifically, referring to **FIG. 3****,** the gasket 200 according to the first embodiment may include: an outer contact 210 that surrounds the peripheral surface of the opening 1 and is located outside the opening 1; a flange contact 220 that surrounds the first flange 110; and an inner contact 230 that surrounds the peripheral surface of the opening 1 and is located inside the opening 1.

In another preferred embodiment, an adhesive member 300 may be further applied to a contact portion between the gasket 200 and the chamber 100, as shown in **FIG. 2****,** to suppress the separation of the gasket 200 from the chamber 100. The adhesive member 300 is preferably made of silicone, but is not limited thereto as long as it can fix the gasket 200 to the chamber 100. Further, the adhesive member 300 may be applied only to an open end of the gasket 200 as shown in **FIG. 2****,** or may be applied to the entire inner circumferential surface exposed by opening the gasket 200.

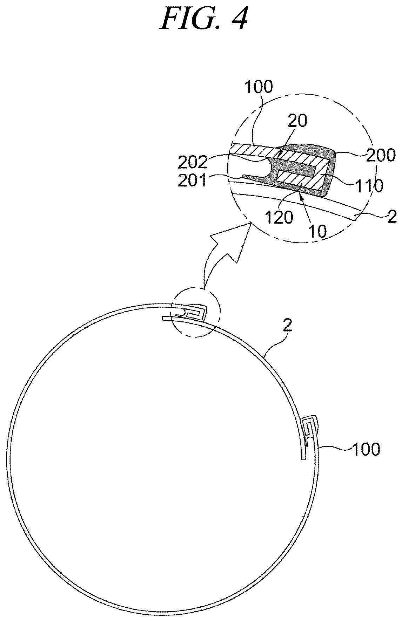

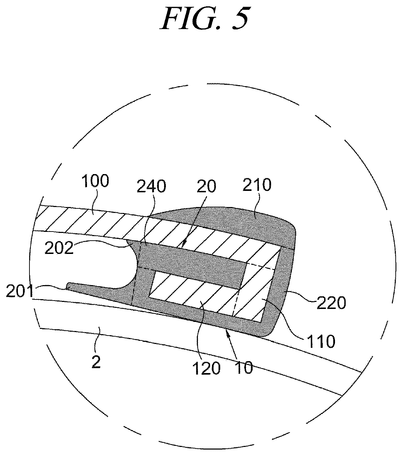

**FIG. 4** is an enlarged cross-sectional view showing the gasket 200 coupled to the chamber 100 according to a second embodiment of the present disclosure, and **FIG. 5** is an enlarged cross-sectional view showing a detailed configuration of the gasket 200 according to the second embodiment of the present disclosure.

Preferably, the gasket 200 according to the second embodiment may have the shape shown in **FIG. 4** when a second flange 120 protrudes from the first flange 110. Specifically, the second flange 120 protrudes from an end of the first flange 110 and is bent to form an "L"-shaped cross-section in a direction opposing the opening 1. The gasket 200 according to the second embodiment may be configured to surround both the first flange 110 and the second flange 120.

Specifically, referring to **FIG. 5****,** the gasket 200 according to the second embodiment may include: the outer contact 210 that surrounds the peripheral surface of the opening 1 and is located outside the opening 1; the flange contact 220 that surrounds the first flange 110 and the second flange 120; the inner contact 230 that surrounds the peripheral surface of the opening 1 and is located inside the opening 1; and a flange insert 240 that is inserted into a space between the inside of the opening 1 and the first and second flanges 110 and 120.

In yet another preferred embodiment, a micro-pattern for increasing friction may be further formed on a contact surface between an inner circumferential surface of the chamber 100 and the flange insert 240 to suppress the separation of the gasket 200 from the chamber 100. The micro-pattern may be formed on one or both of the inner circumferential surface of the chamber 100 and an upper surface of the flange insert 240.

In still another preferred embodiment, a micro-pattern for increasing friction may be further formed on a contact surface between an outer circumferential surface of the door 2 and the flange contact 220 to suppress the separation of the gasket 200 from the chamber 100. The micro-pattern may be formed on one or both of the outer circumferential surface of the door 2 and an upper surface of the flange contact 220.

In the most preferred embodiment, micro-patterns for increasing friction may be formed both on the contact surface between the inner circumferential surface of the chamber 100 and the flange insert 240 and on the contact surface between the outer circumferential surface of the door 2 and the flange contact 220 to suppress the separation of the gasket 200 from the chamber 100. With these micro-patterns, it is possible to improve the sealing performance and effectively maintain the airtightness in the chamber 100 by suppressing the separation of the gasket 200 from the chamber 100.

In a more preferred embodiment of the gasket 200 according to the second embodiment of the present disclosure, the gasket 200 may further include at least one of a first wing 201 and a second wing 202, as shown in **FIG. 5****.**

The first wing 201 is formed on a first sealing surface 10 in contact with the outer circumferential surface of the door 2 among sealing surfaces of the gasket 200 to extend along the outer circumferential surface of the door 2. Specifically, the first wing 201 is formed to extend from the flange contact 220 of the gasket 200.

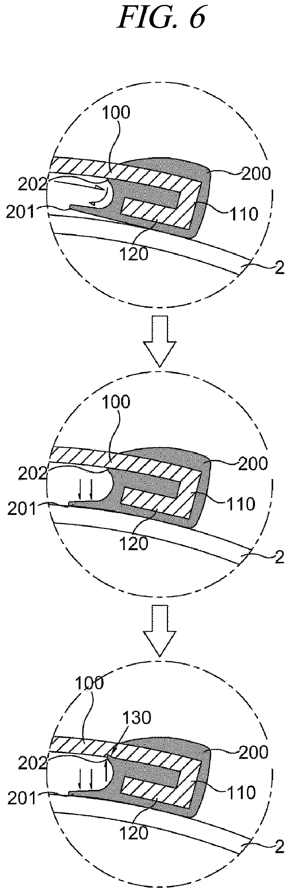

Thus, when an air pressure inside the chamber 100 increases, the chamber 100 is sealed as the first wing 201 is brought into contact with the door 2 by air between the chamber 100 and the door 2. A detailed embodiment of this will be described later with reference to **FIG. 6****.**

The second wing 202 is formed to extend from a second sealing surface 20 in contact with the inner circumferential surface of the chamber 100 along the inner circumferential surface of the chamber 100. Specifically, the second wing 202 is formed to extend from the flange insert 240 of the gasket 200.

In another embodiment of the second wing 202, if the second wing 202 is formed in the gasket 200 according to the first embodiment, the second wing 202 may be formed to extend from the inner contact 230 of the gasket 200.

In a preferred embodiment where the second wing 202 is formed, the chamber 100 may further include a groove 130 formed on the inner circumferential surface in contact with the second wing 202 and corresponding in shape to the second wing 202. When the groove 130 is formed in the chamber 100, the second wing 202 is brought into close contact to be inserted into the groove 130 by air inside the chamber 100. Thus, it is possible to improve the sealing performance.

**FIG. 6** is an enlarged cross-sectional view illustrating the principle by which the first wing 201 of the gasket 200 is brought into close contact with the door 2 according to the second embodiment of the present disclosure.

Referring to **FIG. 6****,** in the gasket 200 according to the second embodiment of the present disclosure, as the pressure inside the chamber 100 increases, the first wing 201 is bent and brought into close contact with to the outer circumferential surface of the door 2 by air entering between the chamber 100 and the door 2. To this end, the gasket 200 is preferably made of a soft material.

In this case, the second wing 202 is also bent and brought into close contact with the inner circumferential surface of the chamber 100 by air entering between the chamber 100 and the door 2. When the groove 130 is formed on the inner circumferential surface of the chamber 100, the second wing 202 is inserted into the groove 130 and thus maintains the airtightness.

In a preferred embodiment where the first wing 201 is more effectively brought into close contact with the door 2, the first wing 201 may be formed with a smaller thickness than that of the flange contact 220 that surrounds the first flange 110 or the second flange 120. Likewise, the second wing 202 may be formed with a smaller thickness than that of the flange insert 240.

In a preferred embodiment of the first wing 201 and the second wing 202, an end of the first wing 201 or the second wing 202 may be formed in an edge shape. When the ends of the first wing 201 and the second wing 202 are formed in an edge shape, the sealing performance can be improved and the airtightness can be continuously maintained by minimizing the influence of a pressure gradient of a gas inside the chamber 100.

The exemplary embodiments of the present disclosure described above are disclosed for purposes of illustration, and it will be understood by a person with ordinary skill in the art that various modifications, changes, and additions are made within the spirit and scope of the present disclosure, and such modifications, changes, and additions should be regarded as falling within the scope of the claims. Also, various replacements, modifications, and changes may be made without departing from the spirit and scope of the present disclosure by a person with ordinary skill in the art. Therefore, the present disclosure is not limited by the above-described embodiment and the accompanying drawings.

In the example system described above, the methods are described based on a flowchart as a series of processes or blocks. However, the present disclosure is not limited to the order of processes, and some processes may occur in a different order or at the same time from the other processes as described above. In addition, it will be understood by a person with ordinary skill in the art that that the processes illustrated in the flowchart are not exclusive and other processes may be included or one or more processes in the flowchart may be deleted without affecting the scope of the present disclosure.

| | | | |
|---|---|---|---|
| 1: | Opening | 2: | Door |
| 100: | Chamber | 110: | First flange |
| 120: | Second flange | 130: | Groove |
| 200: | Gasket | 210: | Outer contact |
| 220: | Flange contact | 230: | Inner contact |
| 240: | Flange insert | 201: | First wing |
| 202: | Second wing | 300: | Adhesive member |
| 10: | First sealing surface | 20: | Second sealing surface |

## Claims

1. A hyperbaric oxygen chamber including a sealing gasket 200 configured to seal a gap between a chamber 100 equipped with a first flange 110 protruding inwards from a peripheral surface of an opening 1; and a door 2 that opens inwards toward the chamber 100,
wherein the gasket 200 is configured to surround the first flange 110 and partially surround the peripheral surface of the opening 1.

2. The hyperbaric oxygen chamber including a sealing gasket of claim 1,
wherein a second flange 120 protrudes from an end of the first flange 110 and is bent to form an "L"-shaped cross-section in a direction opposing the opening 1.

3. The hyperbaric oxygen chamber including a sealing gasket of claim 2, further comprising:
a first wing 201 formed on a first sealing surface 10 in contact with an outer circumferential surface of the door 2 of the gasket 200 to extend along the outer circumferential surface of the door 2;
wherein when an air pressure inside the chamber 100 increases, the chamber 100 is sealed as the first wing 201 is brought into contact with the door 2 by air between the chamber 100 and the door 2.

4. The hyperbaric oxygen chamber including a sealing gasket of claim 3,
wherein the first wing 201 is formed with a smaller thickness than that of a flange contact 220 that surrounds the first flange 110 or the second flange 120.

5. The hyperbaric oxygen chamber including a sealing gasket of claim 1,
wherein the gasket 200 further includes:
a second wing formed to extend from a second sealing surface 20 in contact with an inner circumferential surface of the chamber 100 along the inner circumferential surface of the chamber 100.

6. The hyperbaric oxygen chamber including a sealing gasket of claim 5,
wherein the chamber 100 further includes:
a groove 130 formed on the inner circumferential surface in contact with the second wing 202 and corresponding in shape to the second wing 202.

7. The hyperbaric oxygen chamber including a sealing gasket of claim 3 or 5,
wherein an end of the first wing 201 or the second wing 202 is formed in an edge shape.

8. The automatic pressure control system of claim 1, further comprising:
an adhesive member 300 applied to a contact portion between the gasket 200 and the chamber 100.
